# EUROPEAN PATENT SPECIFICATION

(11) **EP 0 354 465 B1**
(45) Date of publication and mention of the grant of the patent: **14.12.1994**
(21) Application number: 89114288.7
(22) Date of filing: 02.08.1989
(51) Int. Cl.: G02B 5/20, H01J 29/89

(54) **Color filter and cathode-ray tube using the color filter**
Farbfilter und eine einen solchen Filter verwendende Kathodenstrahlröhre
Filtre de couleur et tube à rayons cathodiques utilisant un tel filtre

(30) Priority: 08.08.1988 JP 196091/88
(43) Date of publication of application: 14.02.1990
(73) Proprietor: KABUSHIKI KAISHA TOSHIBA, Kawasaki-shi, Kanagawa-ken 210 (JP)
(72) Inventor: Itou, Takeo Intellectual Property Division, Minato-ku Tokyo 105 (JP); Matsuda, Hidemi Intellectual Property Division, Minato-ku Tokyo 105 (JP)
(74) Representative: Henkel, Feiler, Hänzel & Partner

(56) References cited:
- EP-A- 0 021 500
- US-A- 4 245 242

## Description

The present invention relates to a color filter and a cathode-ray tube using the color filter.

As examples of a color filter having an inorganic substrate, there are known a color filter having a color layer obtained by diffusing metallic ions in a glass plate, and a color filter formed by printing a dye on a glass plate. In the case of the former, however, the hue of the color filter cannot be freely selected because of the use of metal ions. Also, in the case of the latter, it is difficult to effect printing on the surface of an inorganic substrate.

Japanese Patent Application No. 51-107 317 discloses a method wherein an aluminum layer is deposited on an inorganic substrate, the aluminum layer is oxidized to obtain a transparent aluminum oxide layer, and the aluminum oxide layer is colored with a dye or the like, thus forming a color layer. In this method, an expensive deposition apparatus is required for the deposition of aluminum. Thus, the cost for manufacturing the color layer increases. The deposition device becomes more expensive, as the size of the substrate, on which aluminum is to be deposited, increases. In addition, since the refractive index of aluminum oxide is high, the formation of an aluminum oxide layer on the surface of a glass plate, etc., increases the reflectivity of the resulting body and the transparency of the body decreases. Furthermore, since the light resistance of the color layer colored with a dye is low, the color of the dye on the surface of the aluminum oxide layer may be faded by direct irradiation of solar light.

An object of the present invention is to provide a color filter which has high light resistance, and allows easy formation, and in which a hue can be freely selected. This object is achieved by a color filter as defined in claim 1.

Another object of this invention is to provide a cathode-ray tube having, on its faceplate, a color filter having a selectable hue, having high light resistance, and allowing easy formation. This object is achieved by a cathode-ray tube as defined in claim 9.

The color filter of the present invention comprises a vitreous material including at least one kind of organic compound having visible light absorbing properties, and at least one metallic compound selected from the group consisting of a Ni compound and a Co compound.

A given dye can be used in the color filter of this invention as an organic compound having visible light absorbing properties. Thus, the hue of the color filter is freely selectable.

According to the present invention, high light resistance can be attained by sealing a dye in the vitreous material in the presence of at least one metal compound selected from the group consisting of a Ni compound and a Co compound.

The cathode-ray tube of the present invention has the color filter on its faceplate. In this invention, the hue of the faceplate can be freely selected by choosing a given dye as the organic compound. In addition, the color filter of the cathode-ray tube has high light resistance.

The color filter of the present invention is applicable not only to the cathode-ray tube, but also to sunglasses, show windows, windshields of vehicles, etc.

This invention can be more fully understood from the following detailed description when taken in conjunction with the accompanying drawings, in which:
Fig. 1 is a graph showing the relationship between a weight ratio of the Ni compound content to the organic compound content, and an absorption residual rate of an absorption peak after irradiation of ultraviolet rays, in a color filter according to Example 1 of the present invention;
Fig. 2 is a graph showing the relationship between a weight ratio of the ZrO₂ content to the SiO₂ content, and an absorption residual rate of an absorption peak after irradiation of ultraviolet rays, in a color filter according to Example 2 of the present invention; and
Fig. 3 is a partially broken cross section of a cathode-ray tube according to Example 5 of the present invention.

The inventors examined the effects of additives acting on the light resistance of a dye contained in a glass material. For this purpose, they sealed various additives along with the dye in a vitreous film, and the light resistance of the dye was examined. More specifically, a commercially available ultraviolet absorbent, antioxidant, and metallic compound were used as additives, Rhodamine B (manufactured by Kanto-Kagaku Kabushiki-Kaisha) was used as a dye, and a metal halide lamp was used as a light source. Thus, a peak absorption residual rate of ultraviolet rays in the dye was found, after 4-hour irradiation of ultraviolet rays under the condition of 100 mW/cm². The absorption residual rate (D) is given by:$\text{D =} \frac{\text{(1 - T4)}}{\text{(1 - T0)}} \text{× 100 (%)}$
TO: Initial Main Peak Transmittance
T4: Main Peak Transmittance obtainable after 4 hours

The results are shown in Table 1.

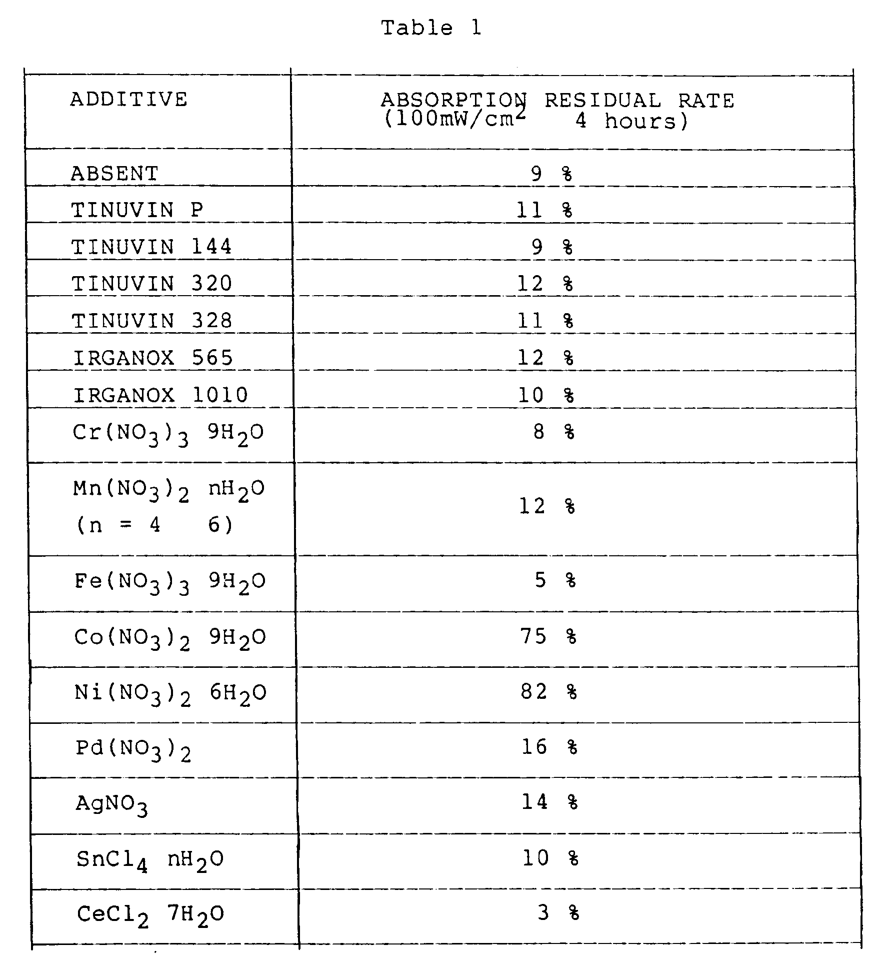

As seen from Table 1, the antioxidant and ultraviolet absorbent, which are effectively used in plastics or resin, did not exhibit effects of preventing deterioration in light resistance of the dye. In contrast, the Ni compound and Co compound exhibit remarkable effects of preventing deterioration in light resistance.

Regarding the Ni compounds and Co compounds, similar effects were obtained from compounds shown in Table 2.

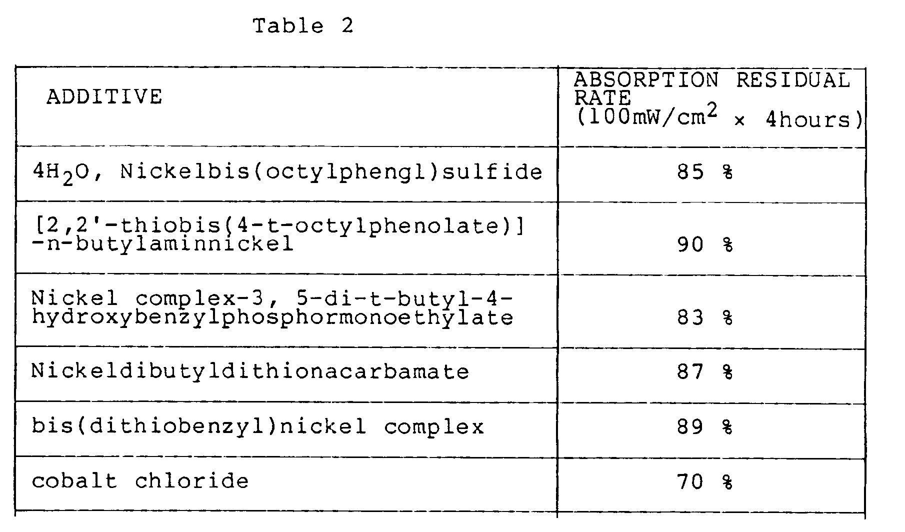

It is not clear why excellent effects can be obtained only in the case of the Ni compound and the Co compound. It seems that this is a phenomenon peculiar to the Ni compound or Co compound in the case where an organic compound such as a dye is sealed in the vitreous film. It is likely that the Ni compound or the Co compound form a complex with an organic compound having visible light absorbing properties in a vitreous material such as an SiO₂ structure, thereby to prevent a radical reaction of an organic compound due to irradiation of ultraviolet, etc.

The color filter of the present invention is made of a vitreous material including at least one kind of organic compound having visible light absorbing properties, and at least one selected from the group consisting of Ni compounds and Co compounds.

As the organic compound, a dye, a near ultraviolet radiation absorbent a near infrared radiation absorbent, etc. may be used. The hue of the dye can be freely selected. For example, the following may be used:

Rhodamine B, Acid Rhodamine B, Kayaset Blue 5P, Kayaset Cyan 2P, Kayanol Mealing Red 6BW, Kayaset Red 14P, Kayaset Magenta IP, Kayaset Red SFB, IR 750, Kayaset IRG 002, Kayaset IRG 003, Kayaset IRG 820, Kayaset IRG 022, Kayaset IRG 023, Kayaset CY 2, Kayaset CY 4, Kayaset CY 9 (manufactured by NIHON KAYAKU Kabushiki Kaisha), Aizen Spilon S.P.T. Blue 111, Aizen Spilon Blue C-RH, Aizen Spilon Violet C-RH, Aizen Spilon Green C-GH, Aizen Spilon Red C-GH, Aizen Spilon Red C-BH, Aizen Spot Yellow-1, Aizen Spot Orange-1, Aizen Spot Red-1, Aizen Spot Pink-1, Aizen Spot Blue 1, Aizen Spot Violet-1, Aizen Spot Green-3, Aizen Spot Black-1 (manufactured by HODOGAYA KAGAKU KOUGYOU Kabushiki Kaisha).

The content of the organic compound varies depending on the kind of the organic compound used. Normally, 0.03 to 50 % of the organic compound is used based on the weight of the entire color filter.

As the Ni compound, the following, for example, may be used:
Ni(NO₃)₂·6H₂O, NiCl₂·6H₂O, NiF₂, NiBr₂, NiI₂, NiSO₄, Ni(CH₃COO)₂·4H₂O, nickelbis(octylphenyl)sulfide, [2,2′-thiobis(4-t-octylphenolate)]-n-butylaminnickel, nickel complex-3, 5-di-t-butyl-4-hydroxybenzylphosphomonoethylate, nickeldibutyldithionacarbamate, bis(dithiobenzyl)nickel complex, etc.

In addition, as the Co compound, the following, for example, may be used: CoCl₂, CoF₂, CoBr₂, CoI₂, CoSO₄, Co(CH₃COO)₂·4H₂O, CoN0₃·6H₂0, etc.

The weight ratio of added Ni compound or Co compound to the organic compound is 0.05 to 10, and preferably 0.2 to 6. There is a tendency that, if the weight ratio is smaller than 0.05, a sufficient light resistance is not obtained, and if the weight ratio is larger than 10, the transparency and strength of the color filter may be degraded.

It is desirable that the vitreous material be formed by an alcoholate method. In the alcoholate method, an alcohol solution of an alcoholate, for example, Si(OCH₃), represented by the general formula (2):$\text{M(OR)m (where M = metal, R = alkyl group having the number of carbon atoms of 1 to 4, and m = valence of M)}$
is subjected to a hydrolysis and a condensation reaction with an acid catalyst or the like, thus obtaining an O - Si - O bond. Normally, SiO₂ glass is manufactured in a melting process at a temperature of 1500 to 2300 °C. If this method is used, the O - Si - O bond can be obtained at a low temperature range of about 80 to 150 °C. It is thus possible to mix a dye or the like, which is susceptible to thermal fading, in the resulting vitreous material.

As the alcoholate, the following, for example, may be used:
Si(OCH₃)₄, Si(OC₂H₅)₄, Si(OC₃H₇)₄, Si(OC₄H₉)₄, Zr(OCH₃)₄, Zr(OC₂H₅)₄, Zr(OC₃H₇)₄, Zr(OC₄H₉)₄, Ti(OCH₃)₄, Ti(OC₂H₅)₄, Ti(OC₃H₇)₄, Ti(OC₄H₉)₄, etc.

As the acid catalyst, hydrochloric acid, nitric acid, acetic acid, sulphuric acid, various organic acids, etc., may be used.

### Example 1

Solutions A1 to A9 having the following compositions were prepared.
- tetramethoxysilane: 2 wt%
- hydrochloric acid: 1 wt%
- rhodamine B: 0.2 wt%
- Ni (NO₃)₂ 6H₂: 0.005 to 3 wt%
- isopropyl alcohol: balance

The amounts of the Ni compounds used in solutions A1 to A9 are 0.005 wt%, 0.01 wt%, 0.02 wt%, 0.1 wt%, 0.2 wt%, 0.4 wt%, 1.0 wt%, 2.0 wt%, and 3.0 wt%, respectively. In other words, the weight ratio of Ni compounds to the organic compound is 0.025 to 15. Solutions A1 to A9 were aged for 3 hours at room temperature to proceed a hydrolysis and a condensation reaction in the solutions to some extent, then the solutions were coated on a glass plate by a dipping method, and dried at 100 °C for 10 minutes. Thus, a red color filter containing SiO₂ as a main component was obtained. Based on formula (1) described above, a peak absorption residual rate of ultraviolet rays was found, by measuring the absorption peak (initial main peak) transmittance of the obtained color filter, and the absorption main peak transmittance (obtained after 4-hour radiation of ultraviolet rays).

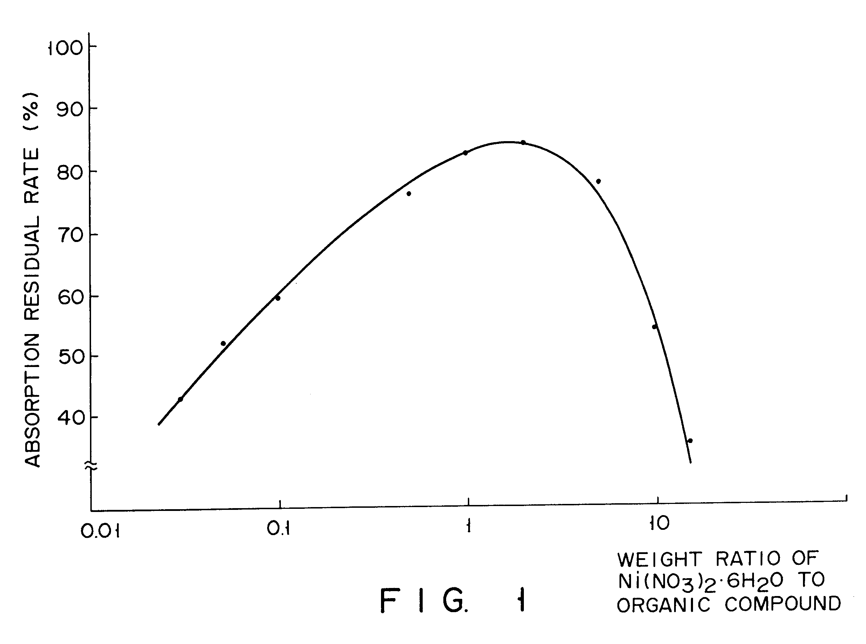

Fig. 1 is a graph showing the relationship between a weight ratio of the Ni compound content to the organic compound content, and the absorption residual rate of ultraviolet rays.

As seen from Fig. 1, the color filter had an excellent absorption residual rate. Also, it was found that a desirable weight ratio of the Ni compound to the organic compound, for example, a dye, was 0.005 to 10, and preferably 0.2 to 6.

### Example 2

Solutions B1 to B6 having the following compositions were prepared.
- Si(OC₂H₅)₄: 0.15 wt%
- Zr(OC₄H₉)₄: 0.27 to 1.61 wt%
- hydrochloric acid: 1 wt%
- water: 6 wt%
- rhodamine B: 0.2 wt%
- isopropyl alcohol: balance

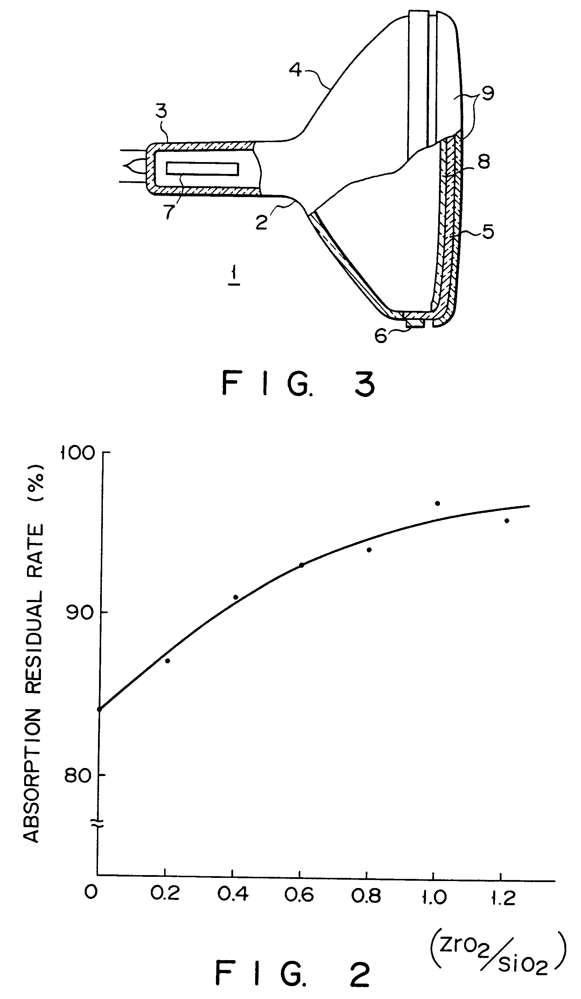

The amounts of the Zr(OC₄H₉)₄ added in solutions B1 to B6 are 0.27 wt%, 0.54 wt%, 0.81 wt%, 1.08 wt%, 1.34 wt%, and 1.61 wt%, respectively. A red color filter containing SiO₂ and ZrO₂ as main components was obtained from solutions B1 to B6 by the same method as that employed in Example 1. Fig. 2 shows the peak absorption residual rate of ultraviolet rays. As seen from Fig. 2, the color filter had an excellent absorption residual rate. Also, it was found that, when the vitreous component is a mixture of ZrO₂ and SiO₂, the vitreous component exhibits more excellent light resistance, than the vitreous component made solely of SiO₂. As the ratio of ZrO₂/SiO₂ increases, the absorption residual rate increases. The absorption residual rate is saturated when the ratio of ZrO₂/SiO₂ reaches 1 or thereabouts. It is desirable that the ratio of ZrO₂/SiO₂ be 0 to 1, since the surface reflectivity may increase when the ratio of ZrO₂/SiO₂ exceeds 1.

### Example 3

Solution C having the following composition was prepared, and a red color filter was obtained by the same process as in Example 1. The peak absorption residual rate was excellent, i.e., 75%.
- Si(OC₂H₅)₄: 0.15 wt%
- hydrochloric acid: 1 wt%
- water: 6 wt%
- rhodamine B: 0.2 wt%
- Ni(No₃)₂·6H₂O: 0.2 wt%
- isopropyl alcohol: balance

### Example 4

Solution C having the following composition was prepared, and a blue color filter was obtained by the same process as in Example 1. The peak absorption residual rate was excellent, i.e., 75%.
- Si(OC₂H₅)₄: 0.15 wt%
- hydrochloric acid: 1 wt%
- water: 6 wt%
- Kayaset Blue-K-FL: 0.2 wt%
- Ni(NO₃)₂·6H₂O: 0.2 wt%
- isopropyl alcohol: balance

### Example 5

Fig. 3 shows a cathode-ray tube according to an embodiment of the present invention.

Cathode-ray tube 1 has hermetically sealed glass envelope 2 from which the air is evacuated. Envelope 2 has neck 3 and cone 4 continuous with neck 3, as well as faceplate 5 closely attached on cone 4 by means of an adhesive of frit glass. Metallic tension band 6 is wound around the peripheral side wall of faceplate 5 to prevent cathode-ray tube 1 from explosion. Electron gun 7 for emitting electron beams is arranged within neck 3. The inner surface of faceplate 5 is provided with a phosphor screen including phosphor stripes, which emit red, green and blue light upon excitation by the electron beams, and light-absorbing black stripes arranged one between each pair of phosphor stripes. A shadow mask (not shown) having holes formed over its entire surface area is arranged near the phosphor screen. A deflecting system (not shown) for deflecting the electron beams to scan phosphor screen 8 is arranged on the outside of cone 4.

The outer surface of faceplate 5 of cathode-ray tube 1 is coated with color filter 9. Color filter 9 is made of a vitreous material including at least one kind of organic compound having visible light absorbing properties, and at least one metal compound selected from the group consisting of a Ni compound and a Co compound. Color filter 9 was made in the following manner. Solution A8 employed in Example 1 was prepared. The solution A8 was applied by a spin coat over the front surface of the faceplate of a finished 25-inch color cathode-ray tube, and then dried at 100 °C for 10 minutes. Thus, color filter 9 was obtained.

The characteristics of the cathode-ray tube were examined, and it was found that the contrast of image was remarkably improved and the light resistance of the color filter was very high.
*vermutlich: eine Metallverbindung

## Claims

1. A color filter (9) comprising a vitreous material obtainable by hydrolyzing and condensing a metal alkoxide, containing at least one kind of an organic compound having visible light-absorbing properties, and at least one metallic compound selected from the group consisting of a Ni compound and a Co compound.

2. The color filter (9) according to claim 1, characterized in that said vitreous material contains at least one oxide selected from the group consisting of SiO₂, ZrO₂ and TiO₂ as a main component.

3. The color filter (9) according to claim 1, characterized in that the weight ratio of the added metallic compound to the organic compound is 0.05 to 10.

4. The color filter (9) according to claim 1, characterized in that the weight ratio of the added metallic compound to the organic compound is 0.2 to 6.

5. The color filter (9) according to claim 1, characterized in that said Ni compound is at least one compound selected from the group consisting of Ni(NO₃)₂.6H₂O, NiCl₂.6H₂O, NiF₂, NiBr₂, NiI₂, NiSO₄, Ni(CH₃COO)₂.4H₂O, nickelbis(octylphenyl)sulfide, [2,2′-thiobis(4-t-octylphenolate)]-n-butylaminnickel, nickel complex-3,5-di-t-butyl-4-hydroxybenzylphosphormonoethylate, nickeldibutyldithionocarbamate, and bis(dithiobenzyl)nickel complex.

6. The color filter (9) according to claim 1, characterized in that said Co compound is at least one compound selected from the group consisting of CoCl₂, CoF₂, CoBr₂, CoI₂, CoSO₄, Co(CH₃COO)₂.4H₂O and Co(NO₃)₂.6H₂O.

7. The color filter (9) according to claim 1, characterized in that said metal alkoxide comprises one metal selected from the group consisting of Si(OCH₃)₄, Si(OC₂H₅)₄, Si(OC₃H₇)₄, Si(OC₄H₉)₄, Zr(OCH₃)₄, Zr(OC₂H₅)₄, Zr(OC₃H₇)₄, Zr(OC₄H₉)₄, Ti(OCH₃)₄, Ti(OC₂H₅)₄, Ti(OC₃H₇)₄ and Ti(OC₄H₉)₄.

8. The color filter according to claim 1, characterized in that said organic compound has at least one material selected from the group consisting of a dye, a near ultraviolet radiation absorbent, and a near infrared radiation absorbent.

9. A cathode-ray tube (1) comprising a vacuum envelope (2) having a faceplate (5), the inner surface of which is provided with a phosphor screen (8), and a color filter according to claims 1 to 8.

10. The cathode-ray tube (1) according to claim 9, characterized in that said vitreous material contains SiO₂ as a main component.

11. The cathode-ray tube (1) according to claim 9, characterized in that said vitreous material contains TiO₂ as a main component.

12. The cathode-ray tube (1) according to claim 9, characterized in that said vitreous material contains ZrO₂ as a main component.

13. The cathode-ray tube (1) according to claim 9, characterized in that said vitreous material contains SiO₂ and TiO₂ as a main component.

14. The cathode-ray tube (1) according to claim 9, characterized in that said vitreous material contains SiO₂ and ZrO₂ as a main component.

15. The cathode-ray tube (1) according to claim 9, characterized in that the weight ratio of the added metallic compound to the organic compound is 0.005 to 10.

16. The cathode-ray tube (1) according to claim 9, characterized in that the weight ratio of the added metallic compound to the organic compound is 0.2 to 6.

17. The cathode-ray tube (1) according to claim 9, characterized in that said Ni compound is at least one compound selected from the group consisting of Ni(NO₃)₂.6H₂O, NiCl₂.6H₂O, NiF₂, NiBr₂, NiSO₄, Ni(CH₃COO)₂.4H₂O, nickelbis(octylphenyl)sulfide, [2,2′-thiobis(4-t-octylphenolate)]-n-butylaminnickel, nickel complex-3,5-di-t-butyl-4hydroxybenzylphosphormonoethylate, nickeldibutyldithionocarbamate, and bis(dithiobenzyl)nickel complex.

18. The cathode-ray tube (1) according to claim 9, characterized in that said Co compound is at least one compound selected from the group consisting of CoCl₂, CoF₂, CoBr₂, CoI₂, CoSO₄, Co(CH₃COO)₂.4H₂O and Co(NO₃)₂.6H₂O.

## Patentansprüche

1. Farbfilter (9), umfassend ein durch Hydrolyse und Kondensation eines Metallalkoxids erhältliches glasartiges Material mit mindestens einer Art einer organischen Verbindung mit Absorptionseigenschaften für sichtbares Licht und mindestens einer Metallverbindung, ausgewählt aus der Gruppe Ni- und Co-Verbindungen.

2. Farbfilter (9) nach Anspruch 1, dadurch gekennzeichnet, daß das glasartige Material mindestens ein Oxid, ausgewählt aus der Gruppe SiO₂, ZrO₂ und TiO₂, als Hauptkomponente enthält.

3. Farbfilter (9) nach Anspruch 1, dadurch gekennzeichnet, daß das Gewichtsverhältnis zugesetzte Metallverbindung/organische Verbindung 0,05 bis 10 beträgt.

4. Farbfilter (9) nach Anspruch 1, dadurch gekennzeichnet, daß das Gewichtsverhältnis zugesetzte Metallverbindung/organische Verbindung 0,2 bis 6 beträgt.

5. Farbfilter (9) nach Anspruch 1, dadurch gekennzeichnet, daß es sich bei der Ni-Verbindung um mindestens eine solche, ausgewählt aus der Gruppe Ni(NO₃)₂·6H₂O, NiCl₂.6H₂O, NiF₂, NiBr₂, NiI₂, NiSO₄, Ni(CH₃COO)₂.4H₂O, Nickelbis-(octylphenyl)-sulfid, [2,2′-Thiobis-(4-tert.-octylphenolat)]-n-butylaminnickel, Nickelkomplex-3,5-di-tert.-butyl-4-hydroxybenzylphosphormonoethylat, Nickeldibutyldithionocarbamat und Bis-(dithiobenzyl)-nickelkomplex, handelt.

6. Farbfilter (9) nach Anspruch 1, dadurch gekennzeichnet, daß es sich bei der Co-Verbindung um mindestens eine Verbindung aus der Gruppe CoCl₂, CoF₂, CoBr₂, CoI₂, CoSO₄, Co(CH₃COO)₂·4H₂O und Co(NO₃)₂·6H₂O handelt.

7. Farbfilter (9) nach Anspruch 1, dadurch gekennzeichnet, daß das Metallalkoxid ein Metall*, ausgewählt aus der Gruppe Si(OCH₃)₄, Si(OC₂H₅)₄, Si(OC₃H₇)₄, Si(OC₄H₉)₄, Zr(OCH₃)₄, Zr(OC₂H₅)₄, Zr(OC₃H₇)₄, Zr(OC₄H₉)₄, Ti(OCH₃)₄, Ti(OC₂H₅)₄, Ti(OC₃H₇)₄ und Ti(OC₄H₉)₄, umfaßt.

8. Farbfilter nach Anspruch 1, dadurch gekennzeichnet, daß die organische Verbindung mindestens ein Material, ausgewählt aus der Gruppe Farbstoff, Absorptionsmittel für den nahen UV-Bereich und Absorptionsmittel für den nahen Infrarotbereich umfaßt.

9. Kathodenstrahlröhre (1), umfassend einen Vakuumkolben (2) mit einer Stirnplatte (5), deren Innenwandfläche mit einem Leuchtstoffschirm (8) versehen ist, und einem Farbfilter nach Ansprüchen 1 bis 8.

10. Kathodenstrahlröhre (1) nach Anspruch 9, dadurch gekennzeichnet, daß das glasartige Material SiO₂ als eine Hauptkomponente enthält.

11. Kathodenstrahlröhre (1) nach Anspruch 9, dadurch gekennzeichnet, daß das glasartige Material TiO₂ als eine Hauptkomponente enthält.

12. Kathodenstrahlröhre (1) nach Anspruch 9, dadurch gekennzeichnet, daß das glasartige Material ZrO₂ als eine Hauptkomponente enthält.

13. Kathodenstrahlröhre (1) nach Anspruch 9, dadurch gekennzeichnet, daß das glasartige Material SiO₂ und TiO₂ als eine Hauptkomponente enthält.

14. Kathodenstrahlröhre (1) nach Anspruch 9, dadurch gekennzeichnet, daß das glasartige Material SiO₂ und ZrO₂ als eine Hauptkomponente enthält.

15. Kathodenstrahlröhre (1) nach Anspruch 9, dadurch gekennzeichnet, daß das Gewichtsverhältnis zugesetzte Metallverbindung/organische Verbindung 0,005 bis 10 beträgt.

16. Kathodenstrahlröhre (1) nach Anspruch 9, dadurch gekennzeichnet, daß das Gewichtsverhältnis zugesetzte Metallverbindung/organische Verbindung 0,2 bis 6 beträgt.

17. Kathodenstrahlröhre (1) nach Anspruch 9, dadurch gekennzeichnet, daß es sich bei der Ni-Verbindung um mindestens eine Verbindung, ausgewählt aus der Gruppe Ni(NO₃)₂·6H₂O, NiCl₂·6H₂O, NiF₂, NiBr₂, NiSO₄, Ni(CH₃COO)₂·4H₂O, Nickelbis-(octylphenyl)-sulfid, [2,2′-Thiobis-(4-tert.-octylphenolat]-n-butylaminnickel, Nickelkomplex-3,5-di-tert.-butyl-4-hydroxybenzylphosphormonoethylat, Nickeldibutyldithionocarbamat und Bis-(dithiobenzyl)-nickelkomplex, handelt.

18. Kathodenstrahlröhre (1) nach Anspruch 9, dadurch gekennzeichnet, daß es sich bei der Co-Verbindung um mindestens eine Verbindung, ausgewählt aus der Gruppe CoCl₂, CoF₂, CoBr₂, CoI₂, CoSO₄, Co(CH₃COO)₂·4H₂O und Co(NO₃)₂·6H₂O, handelt.

## Revendications

1. Filtre coloré (9) comprenant un matériau vitreux qui peut être obtenu par hydrolyse et condensation d'un alcoolate métallique, contenant au moins un type d'un composé organique ayant des propriétés d'absorption de la lumière visible, et au moins un composé métallique choisi dans le groupe formé par un composé de Ni et un composé de Co.

2. Filtre coloré (9) selon la revendication 1, caractérisé en ce que ledit matériau vitreux contient au moins un oxyde choisi dans le groupe formé par SiO₂, ZrO₂ et ZrO₂ en tant que constituant principal.

3. Filtre coloré (9) selon la revendication 1, caractérisé en ce que le rapport massique du composé métallique ajouté au composé organique est de 0,05 à 10.

4. Filtre coloré (9) selon la revendication 1, caractérisé en ce que le rapport massique du composé métallique ajouté au composé organique est de 0,2 à 6.

5. Filtre coloré (9) selon la revendication 1, caractérisé en ce que ledit composé de Ni est au moins un composé choisi dans le groupe formé par Ni(NO₃)₂,6H₂O, NiCl₂,6H₂O, NiF₂, NiBr₂, NiI₂, NiSO₄, Ni(CH₃COO)₂,4H₂O, le sulfure de bis(octylphényl)nickel, le [2,2′-thiobis(4-t-octylphénolate]-n-butylaminenickel, le 3,5-di-t-butyl-4-hydroxybenzylphosphomonoéthylate de nickel complexe, le dibutyldithionocarbamate de nickel et le bis(dithiobenzyl)-nickel complexe.

6. Filtre coloré (9) selon la revendication 1, caractérisé en ce que ledit composé de Co est au moins un composé choisi dans le groupe formé par CoCl₂, CoF₂, CoBr₂, CoI₂, CoSO₄, Co(CH₃COO)₂,4H₂O et Co(NO₃)₂,6H₂O.

7. Filtre coloré (9) selon la revendication 1, caractérisé en ce que ledit alcoolate métallique comprend un alcoolate métallique choisi dans le groupe formé par Si(OCH₃)₄, Si(OC₂H₅)₄, Si(OC₃H₇)₄, Si(OC₄H₉)₄, Zr(OCH₃)₄, Zr(OC₂H₅)₄, Zr(OC₃H₇)₄, Zr(OC₄H₉)₄, Ti(OCH₃)₄, Ti(OC₂H₅)₄, Ti(OC₃H₇)₄ et Ti(OC₄H₉)₄.

8. Filtre coloré selon la revendication 1, caractérisé en ce que ledit composé organique comporte au moins une substance choisie dans le groupe formé par un colorant, une substance absorbant les rayonnements dans l'ultraviolet proche et une substance absorbant les rayonnements dans l'infrarouge proche.

9. Tube cathodique (1) comprenant une enceinte à vide (2) ayant un fond (5), dont la surface interne est munie d'un écran à luminophores (8), et un filtre coloré selon les revendications 1 à 8.

10. Tube cathodique (1) selon la revendication 9, caractérisé en ce que ledit matériau vitreux contient SiO₂ en tant que constituant principal.

11. Tube cathodique (1) selon la revendication 9, caractérisé en ce que ledit matériau vitreux contient TiO₂ en tant que constituant principal.

12. Tube cathodique (1) selon la revendication 9, caractérisé en ce que ledit matériau vitreux contient ZrO₂ en tant que constituant principal.

13. Tube cathodique (1) selon la revendication 9, caractérisé en ce que ledit matériau vitreux contient SiO₂ et TiO₂ en tant que constituant principal.

14. Tube cathodique (1) selon la revendication 9, caractérisé en ce que ledit matériau vitreux contient SiO₂ et ZrO₂ en tant que constituant principal.

15. Tube cathodique (1) selon la revendication 9, caractérisé en ce que le rapport massique du composé métallique ajouté au composé organique est de 0,005 à 10.

16. Tube cathodique (1) selon la revendication 9, caractérisé en ce que le rapport massique du composé métallique ajouté au composé organique est de 0,2 à 6.

17. Tube cathodique (1) selon la revendication 9, caractérisé en ce que ledit composé de Ni est au moins un composé choisi dans le groupe formé par Ni(NO₃)₂,6H₂O, NiCl₂,6H₂O, NiF₂, NiBr₂, NiSO₄, Ni(CH₃COO)₂,4H₂O, le sulfure de bis(octylphényl)nickel, le [2,2′-thiobis(4-t-octylphénolate)]-n-butyl-aminenickel, le 3,5-di-t-butyl-4-hydroxybenzylphosphomonoéthylate de nickel complexe, le dibutyldithionocarbamate de nickel et le bis(dithiobenzyl)nickel complexe.

18. Tube cathodique (1) selon la revendication 9, caractérisé en ce que ledit composé de Co est au moins un composé choisi dans le groupe formé par CoCl₂, CoF₂, CoBr₂, CoI₂, CoSO₄, Co(CH₃COO)₂,4H₂O et Co(NO₃)₂,6H₂O.
